# EUROPEAN PATENT APPLICATION

(11) **EP 4 095 287 A1**
(43) Date of publication of application: **30.11.2022**
(21) Application number: 21175811.5
(22) Date of filing: 25.05.2021
(51) Int. Cl.: C25B 11/031, C25D 1/00, H01M 4/00, H01M 8/00

(54) **POROUS ELECTRODE**

(71) Applicant: Imec VZW, 3001 Leuven (BE); Katholieke Universiteit Leuven KU Leuven Research & Development, 3000 Leuven (BE)
(72) Inventor: PLANKENSTEINER, Nina, 3001 Leuven (BE); SINGH, Sukhvinder, 3001 Leuven (BE); VEREECKEN, Philippe, 3001 Leuven (BE); MEES, Maarten, 3001 Leuven (BE); WODARZ, Siegfried, 3001 Leuven (BE)
(74) Representative: DenK iP bv

(57) **Abstract**

A porous electrode (1) comprising:
a. an electrically conductive porous network (2) of interconnected wires, and
b. an electrically conductive support structure (3),
wherein the network (2) is in direct physical and electrical contact with the support structure (3), wherein the network (2) has a volumetric surface area of from 2 m²/cm³ to 90 m²/cm³, and a porosity of from 50% to 90% ,
wherein a surface of the support structure (3), facing away from the network (2), has openings (5) representing from 2 to 90% of its surface area, and wherein the openings (5) are fluidly connected to the pores of the network (2).

## Description

### Technical field of the invention

The present invention relates to the field of porous electrodes, and more particularly to the field of porous electrodes for use in electrolyzers and other electrochemical devices.

### Background of the invention

Highly porous materials with an extended surface area and mechanical robustness are attractive for a wide range of applications including catalysis, energy conversion, and storage. Unfortunately, state-of-the-art materials such as metal foams, dealloyed metals, or Raney metals commonly show a trade-off between high surface area, porosity, and mechanical stability. Examples of materials that fulfil the desired combination of these three characteristics are described in S. Zankowski et al., ACS Appl. Mater. Interfaces, 10 (2018) 44634-44644, and S. Zankowski et al., J. Electrochem. Soc., 166 (2019) D227-D235. These materials, referred to as "nanomeshes", comprise interconnected metal nanowires which are fabricated through electrochemical plating in a three-dimensional aluminium oxide template. Through optimization of the fabrication procedure, a rigid nanomesh combining a porosity of 75% and the high volumetric surface area of ∼30 cm² for each µm nanomesh thickness has been obtained. The nanomeshes described by Zankowski et al. have been shown to be vastly superior to other state-of-the-art porous and nanostructured materials such as nickel foams. For instance, nickel nanomeshes were compared to a nickel foam in the electrocatalytic production of H₂ and it was shown that the 4.5 µm nanomesh outperformed a 300 times thicker (mm thick) Ni foam. This can be attributed to the high surface area (130x compared to 10x) and the improved mass transport through the highly porous µm thin nanomesh electrode.

Currently, the few µm thin nanomesh cannot be fabricated without a support (either rigid such as a Si wafer or a closed metal foil) and without support it does not have the mechanical robustness to be handled during cell assembly or even processing. The presence of the support, however, renders the nanomesh poorly suitable as an electrode in many applications that greatly benefit from gases and liquids completely crossing through the electrode.

There is, therefore, still a need in the art for new highly porous materials with an extended surface area and mechanical robustness, which do not suffer from the drawback discussed above.

### Summary of the invention

It is an object of the present invention to provide good porous electrodes, methods for forming the same, and electrochemical devices comprising the same.

The above objective is accomplished by porous electrodes, methods, and electrochemical devices according to the present invention.

In a first aspect, the present invention relates to a porous electrode comprising:
a. an electrically conductive porous network of interconnected wires, and
b. an electrically conductive support structure,
wherein the network is in direct physical and electrical contact with the support structure (e.g., it may form a "monolithic" structure), wherein the network has a volumetric surface area of from 2 m²/cm³ to 90 m²/cm³, and a porosity of from 50% to 90%,
wherein a surface of the support structure, facing away from the network, has openings representing from 2 to 90% of its surface area, and wherein the openings are fluidly connected to the pores of the network.

In a second aspect, the present invention relates to a method for the formation of a porous electrode according to any embodiment of the first aspect, comprising the steps of:
a. Forming a first mold comprising a network of interconnected channels, the mold being suitable for molding a network of interconnected wires having a volumetric surface area of from 2 m²/cm³ to 90 m²/cm³, and a porosity of from 50% to 90%, and
b. Forming a second mold on top of the first mold, the second mold being suitable for molding a support structure having a surface, facing away from the network of interconnected wires, having openings representing from 2 to 90%, preferably 50 to 70% of its surface area, and wherein the openings are fluidly connected to the pores of the network of interconnected wires,
c. Filling in the first mold with a first conductive material,
d. Filling in at least partially the second mold with a second conductive material,
wherein step b is performed after step a, and either before step c or after step c and before step d, and
wherein the first and the second conductive materials are different or the same.

In a third aspect, the present invention relates to an electrochemical device comprising a porous electrode according to any embodiment of the first aspect, the electrochemical device being selected from an electrolyzer (e.g., for water electrolysis, CO₂ reduction, N₂ reduction, O₂ reduction, or organic synthesis), a fuel cell, and a battery (e.g., a redox flow battery).

In a further aspect, the present invention relates to the use of an electrode according to any embodiment of the first aspect as a filter.

It is an advantage of embodiments of the first aspect that it possesses good mechanical stability.

It is an advantage of embodiments of the first aspect that it enables fluid transport to and from the network.

It is an advantage of embodiments of the first aspect that the porous electrode has a high electrochemical surface area.

It is an advantage of embodiments of the second aspect of the present invention that the balance between fluid accessibility and mechanical stability can easily be adapted to specific applications.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change, and evolution of devices in this field, the present concepts are believed to represent substantial new and novel improvements, including departures from prior practices, resulting in the provision of more efficient, stable, and reliable devices of this nature.

The above and other characteristics, features, and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows a schematic representation of a porous electrode according to an embodiment of the first aspect of the present invention.
Fig. 2 is a schematic representation of a vertical cross-section through an electrolyzer comprising two porous electrodes according to an embodiment of the first aspect of the present invention.
Fig. 3 depicts an example of a fabrication scheme according to an embodiment of the second aspect of the present invention.
Fig. 4 shows schematically two comparative electrolyzers (top right and middle) and an electrolyzer according to the present invention (top left) and the corresponding current-voltage curves (bottom).

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third, and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under, and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present (and can therefore always be replaced by "consisting of" in order to restrict the scope to said stated features) and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures, or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In the first aspect, the present invention relates to a porous electrode (1).

In embodiments, the porous electrode (1) may be a gas diffusion electrode (1), i.e. an electrode (1) suitable for gases to pass through it from side to side. In the prior art, highly porous materials with an extended surface area and mechanical robustness, such as few micrometer thin metal networks (nanomeshes), remained supported by a non-porous substrate or were attached to a metal non-porous foil of a similar thickness formed by an overplating step. However, for the application of the nanomeshes as electrodes in devices using gases and/or liquid electrolytes (e.g. in electrolyzers generating H₂ and O₂ from water, generating organic compounds from CO₂ reduction, generating ammonia from N₂ reduction, or in fuel cells involving H₂ oxidation and O₂ reduction), it is advantageous to have the electrodes open on both opposing sides. In the case, of gapless (also called zero gap) electrolyzers, i.e., where the electrole abutes the separator or membrane, having electrodes open on both opposing sides is necessary. In the state of the art, the few µm thin nanomeshes cannot be fabricated without a support, and without support it does not have the mechanical robustness to be handled during cell assembly or even processing. The porous electrodes (1) of the present invention, by comprising a support structure (3) having openings (5), are suitable for use in devices using gases/liquids crossing through the electrode and display, at the same time, a part (the network (2)) having a high porosity and an extended surface area, while having overall the mechanical robustness to be handled both during cell assembly and during processing.

The porous electrode (1) comprises an electrically conductive porous network (2) of interconnected wires and an electrically conductive support structure (3).

Both, the conductive porous network (2) and the conductive support structure (3) are porous.

The presence of the conductive support structure (3) allows the porous electrode (1) to be free-standing, i.e., it can be handled without losing its mechanical integrity.

The network (2) is in direct physical and electrical contact with the support structure (3). In preferred embodiments, this is achieved by having the network (2) and the support structure (3) forming a single piece. In other words, the network (2) and the support structure (3) may be monolithically integrated. In these embodiments, the network (2) and the support structure (3) typically comprise a same material. In other embodiments, the network (2) and the support structure (3) do not comprise the same material. Different materials for the network (2) and the support structure can be advantageous to tune the mechanical properties and the catalytic properties independently.

Preferably, both the electrically conductive network (2) and the electrically conductive support structure (3) comprise a same material, most preferably nickel, nickel alloys, or copper. However, they may also differ in their material composition, for example a copper electrically conductive network (2) with nickel electrically conductive support structure (3).

The network (2) has a volumetric surface area of from 2 m²/cm³ to 90 m²/cm³.

The porosity of the network (2) is from 50% to 90%.

In embodiments, the electrically conductive network (2) of interconnected wires may comprise a metal.

In embodiments, the electrically conductive network (2) of interconnected wires may comprise Ni, a Ni alloy, or copper. Preferably, the electrically conductive network (2) of interconnected wires comprises Ni.

Preferably, the wires are made of a metal or have a metal core and a coating thereon.

More preferably, the wires are made of Ni (or a Ni alloy or Cu), or have a Ni (or a Ni alloy, or a Cu core) and a coating thereon.

Most preferably, the wires are made of Ni or have a Ni core and a coating thereon.

In embodiments, the electrically conductive network (2) of interconnected wires may have a total thickness of from 1 to 100 µm, preferably from 2 to 10 µm.

In embodiments, the electrically conductive network (2) of interconnected wires may have a total thickness of from 1 to 100 µm and a surface of the support structure, facing away from the network, may have openings (5) representing from 51 to 90% of its surface area. This is advantageous because it provides a sufficiently strong network to withstand a relatively high fluid flow enabled by the openness of the support structure.

In embodiments, the wires may be from 10 to 200 nm thick, preferably from 30 to 60 nm thick.

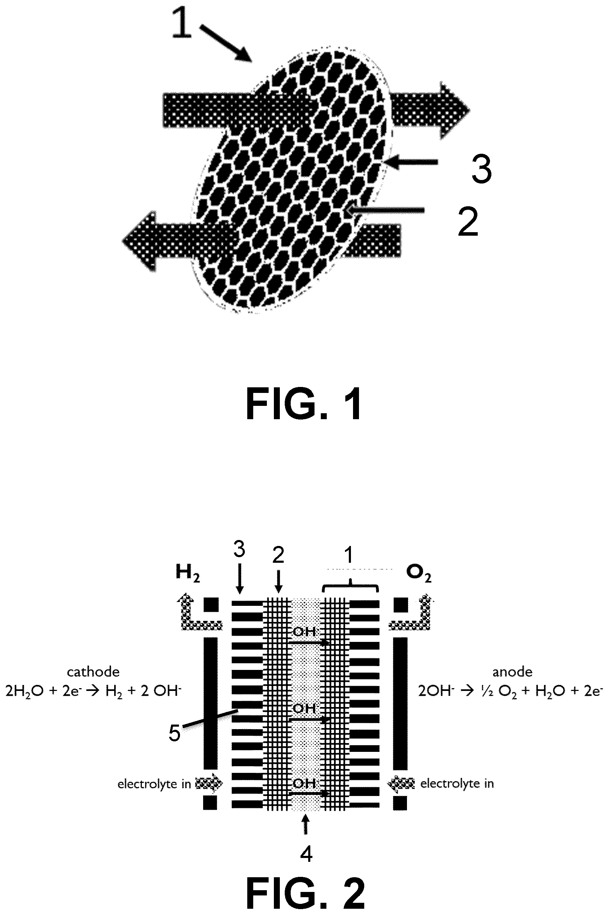

A surface of the electrically conductive support structure (3), facing away from the network (2), has openings (5) representing from 2 to 90% of its surface area, preferably from 15 to 75%, and more preferably from 50 to 70% of its surface area. The openings (5) are fluidly connected to the pores of the network (2). In other words, they enable fluid (liquid and/or gas) transport in and out of the network (2). Fig. 1 shows a schematic representation of a porous electrode (1) according to the first aspect comprising an electrically conductive porous network (2) (black) and a conductive support structure (3) thereon (white). Fluid (liquid or gas) crossing the network (2) via the support structure (3) is represented by the top arrow. Fluid (liquid or gas) crossing the support structure (3) via the network (2) is represented by the bottom arrow.

The support structure (3) acts as a mechanical reinforcement for the network (2).

In embodiments, the electrically conductive support (3) may comprise a metal.

In embodiments, the electrically conductive support structure (3) may comprise Ni, a Ni alloy, or Cu, preferably Ni.

The electrically conductive support structure (3) may take any form. Typically, it forms a pattern.

In embodiments, the electrically conductive support structure (3) may form a grid, such as a honeycomb grid. This is advantageous as it allows obtaining high mechanical strength.

In embodiments, the electrically conductive support structure (3) may form a set of parallel lines. This is advantageous as it allows a particularly good flow.

In embodiments, the pattern of the support structure (3) may be formed of ridges having a width measured perpendicularly to the height of the ridges, of from 50 to 1000 µm. For instance, ridges may cross connect to form a grid, such as a honeycomb grid, and the width of the ridges interconnecting to form the grid may be from 50 to 1000 µm. As another example, if the support structure (3) forms a set of parallel lines, the width of these lines may be from 50 to 1000 µm.

In embodiments, the electrically conductive support structure (3) may have a total thickness (or height) of from 1 to 100 µm, preferably from 2 to 20 µm, more preferably from 2 µm to 10 µm, yet more preferably from 3 µm to 7 µm.

In embodiments, the porous electrode may be a gas diffusion electrode for CO₂, N₂ or O₂ reduction from a gas phase, for a fuel cell or for organic synthesis.

Any feature of the first aspect may be as correspondingly described in any embodiments of the other aspects.

In the second aspect, the present invention relates to a method for the formation of a porous electrode (1) according to any embodiment of the first aspect. The method comprises steps a, b, c, and d. Compared to the process of the prior art, the method of the present invention permits to form a porous electrode (1) having enough porosity to allow fluids (e.g., gases) to pass through while the support structure (3), e.g., a grid support structure (3), is dense enough to act as a "window frame" for the network (2), which is typically µm thin, thereby providing mechanical support without preventing the passage of fluids.

Step a comprises forming a first mold comprising a network (2) of interconnected channels, the mold being suitable for molding an electrically conductive network (2) as described in any embodiment of the first aspect. For instance, the mold may be suitable for molding an electrically conductive network (2) of interconnected wires having a volumetric surface area of from 2 m²/cm³ to 90 m²/cm³, and a porosity of from 50% to 90%.

In embodiments, step a may comprise anodizing a metal layer.

In embodiments, step a may comprise anodizing a layer of an alloy of Al and Cu.

Preferably, the alloy of Al and Cu may comprise:
from 98.0 to 99.9 at% aluminium, and
from 0.1 to 2.0 at% copper.

More preferably, the alloy of Al and Cu may comprise:
from 99.0 to 99.9 at% aluminium, and
from 0.1 to 1.0 at% copper.

Most preferably, the alloy of Al and Cu may comprise:
from 99.5 to 99.9 at% aluminium, and
from 0.1 to 0.5 at% copper.

These at% can be measured for instance by Rutherford backscattering spectroscopy (RBS).

In embodiments, this alloy layer may be supported on a substrate. In embodiments, the substrate may comprise a Si substrate having a TiN layer thereon, and the alloy layer may be on the TiN layer. In embodiments, anodizing the Al/Cu alloy layer may comprise subjecting the Al/Cu alloy layer to a voltage of from 10 to 250 V, preferably from 30 to 85V. This is preferably performed in an acid solution.

An example of suitable acid solution is an oxalic acid solution. Other suitable acid solutions are sulfuric acid solutions and phosphoric acid solutions. The concentration of the acid solution can, for instance, be from 0.1 to 0.5M, preferably from 0.2 to 0.4M. The temperature of the acid solution can for instance be from -5 to 50°C, preferably from 20 to 40°C.

The voltage is preferably maintained until the mold is obtained. For instance, this can involve maintaining the voltage until 5 minutes after that the current starts to drop.

Various Al/Cu alloys behave in a similar way by forming a similar channel inter-distance at a similar voltage. Small inter-channel distances ranging between 20 and 50nm can typically be obtained (e.g., by using H₂SO₄ as an electrolyte) under a voltage of from 10 to about 20V. Inter-distances of from about 51 to 125 nm can typically be achieved (e.g., in H₂C₂O₄) under a voltage of from 21 to about 60V. Larger inter-distances of from 126 to 225 nm can typically be achieved (e.g., in H₃PO₄) for a voltage of from 61 to 90V. Note that higher inter-channel distances can be obtained for even higher voltages.

The average inter-channel distance between any two neighbouring channels can, for instance, be tuned from about 20 nm to about 225 nm by increasing the voltage from 10V to 90V (and by eventually adapting the acid accordingly), where the inter-channel distance is set by the cell voltage applied. The inter-channel distance increases with voltage and is typically independent from the degree of purity and the nature of the impurities in the aluminium.

When a TiN layer is present, the anodization step transforms the TiN layer into a TiO₂ layer. After the anodization step, a step of removing the TiO₂ layer may be performed. This removal can for instance be performed with an appropriate liquid etchant. An example thereof is a solution comprising NH₄OH, H₂O₂, and H₂O. From 1 to 5 minutes (e.g., from 3 to 4 minutes) is typically sufficient to remove the TiO₂ layer. Preferably, a washing step is performed between step a and step b. In embodiments, this washing step may comprise rinsing the structure resulting from step a with demineralized water.

Step b comprises forming a second mold on top of the first mold, the second mold being suitable for molding an electrically conductive support structure (3) as described in any embodiment of the first aspect. For instance, the second mold may be suitable for molding a support structure (3) having a surface, facing away from the network (2) of interconnected wires, having openings (5) representing from 2 to 90% of its surface area, and having openings (5) that are fluidly connected to the pores of the network (2) of interconnected wires.

Preferably, the second mold comprises a wax. Preferably, forming the second mold may comprise printing the second mold on the first mold. Preferably the second mold is applied by inkjet printing. More preferably, the second mold comprises wax and is applied by inkjet printing. In embodiments, the pixel size of the inkjet printing may be from 30 to 60 µm, preferably from 40 to 50 µm. In embodiments, the second mold may comprise a plurality of pillars or ridges. Preferably, the pillars are arranged in a regular pattern. Preferably, the mean height of the pillars or ridges (i.e., the distance between the top and the bottom of the pillars or ridges measured perpendicularly to the top surface of the pillar or ridge) is from 5 µm to 200 µm, preferably from 10 µm to 50 µm. Preferably, the relative standard deviation on the height of the pillars or ridges is 10% or less, more preferably 5% or less. Preferably, the mean width of the pillars or ridges, i.e., their smallest dimension measured along the top surface of the pillars or ridges and parallel thereto) is from 30 to 1000 µm, preferably from 100 to 500 µm, more preferably from 200 to 300 µm. Preferably, the relative standard deviation on the width of the pillars or ridges is 10% or less, more preferably 5% or less. Preferably, the mean pillar or ridge width measured at the top of the pillars or ridges is within 10%, more preferably within 5% of the mean pillar or ridge width measured at the bottom of the pillars or ridges. The horizontal cross-section of the pillars can have any shape. Preferably, the horizontal cross-section of the pillars is hexagonal. This allows for the formation of an electrically conductive structure having a honeycomb shape, which gives excellent mechanical support while assuring a large proportion of the support structure (3) occupied by openings (5). The pattern comprises 2 to 90% open area, preferably comprises from 15 to 90% open area, more preferably from 50 to 90% open area, yet more preferably from 65 to 90% open area.

Step b is preferably performed with a wax at a temperature of from 50 to 200°C, preferably from 90 to 185 °C, more preferably from 90 to 140 °C, yet more preferably from 90 to 120 °C.

During step b, the first mold is preferably kept at a temperature below 50°C.

For instance, it can be kept at room temperature (e.g., a temperature of from 15 to 30°C or 20 to 25°C). Room temperature is advantageous when step b is performed after step c. Indeed, since the first mold is already filled, there is no danger that forming the second mold could introduce undesired material in the first mold. Solidification of the wax at contact with the first mold can be done at room temperature and is advantageously easy and cheap to maintain.

In embodiments, the first mold can also be kept at a temperature below 15°C. For instance, it can be kept below 5°C or below 0°C. This is especially advantageous when step b is performed before step c. Indeed, since the first mold is not yet filled when the second mold is applied, it is advantageous to have the material forming the second mold freeze upon contact with the first mold. This reduces the risk of having undesired material in the first mold.

Step c comprises filling in the first mold with a first conductive material. In embodiments, step c can comprise two sub-steps, a step c1 and a step c2. In step c1, a copper layer may be formed at the bottom of the first mold (typically on the substrate on which the first mold is present, e.g., in the case of an Si substrate having a TiN layer thereon, on the TiN layer). The thickness of the copper layer may for instance be from 10 to 1000 nm, preferably from 30 to 100 nm, more preferably from 50 to 80 nm. Step c1 typically comprises forming a layer of copper on the bottom of the first mold by electrodeposition of copper. For performing step c1, any copper platting bath is suitable. In embodiments, step c1 may be performed with a solution comprising Cu²⁺ in acidic conditions. For instance, the solution may comprise sodium citrate or sulfuric acid. In embodiments, the concentration in Cu²⁺ may be from 0.001 to 1.0 mol/l. For instance, a solution comprising 0.5 mol/l of CuSO₄x5H₂O and 1 mol/l sodium citrate is adequate. In embodiments where sulfuric acid is present in the solution, the concentration of sulfuric acid is preferably kept low to avoid alumina etching, and, for example, may be from 10 mmol/l to 30 mmol/l, preferably from 15 mmol/l to 25 mmol/l.

The Cu²⁺ solution is contacted with the first mold and subjected to a current density of from -2mA/cm² to -40mA/cm² (galvanostatic deposition), preferably from -5mA/cm² to -15mA/cm² or to a potential between -0.2 to -0.8V, preferable from -0.3 to -0.7V (potentiostatic deposition). In embodiments, the electrodeposition time may be from 10 s to 20 minutes. The temperature of the solution used in step c1 may for instance be from 15 °C to 40°C, such as from 25°C to 35°C.

In embodiments, step c2 comprises filing the rest of the first mold by electrodeposition of Ni. For this purpose, a solution comprising Ni sulfamate, boric acid, and NiCl₂ may be used. The concentration in Ni sulfamate may, for instance, be from 0.80 to 1.00 mol/l. The concentration in Boric acid may, for instance, be from 0.40 to 0.60 mol/l. The concentration in NiCl₂ may, for instance, be from 0.03 to 0.05 mol/l. One or more additives may be added to the solution. For instance, a wetting agent or an electroplating enhancer can be added. Step c2 typically involves applying a current density of from -2mA/cm² to -10mA/cm², preferably from -3mA/cm² to -7mA/cm². Step c2 is typically performed until the first mold is entirely filled. This typically takes from 20 to 50 minutes. If step c is performed before step b, it is advantageous not to overfill the mold (during step c2). This way, no Ni overlayer is formed on and above the first mold. In embodiments, the filled mold, and therefore the formed support structure (3) may have a height of from 1 to 100 µm, preferably from 2 to 20 µm, more preferably from 2 µm to 10 µm, yet more preferably from 3 µm to 7 µm..

Step d comprises filling in at least partially the second mold with a second conductive material. Since molds tend to have more regular edges at their bottom and in their mid-section then at their top, it is advantageous to only partially fill in the mold during step d. this way, the molded support structure can be formed with more regular edges at its top. For instance, from 10 to 90%, preferably from 15 to 75% of the height of the second mold can be filled in step d. The first and the second conductive materials may be different or the same. Preferably, step d comprises filing the second mold by electrodeposition of Ni. For instance, the solution used may be the same as for step c2. For this purpose, a solution comprising Ni sulfamate, boric acid, and NiCl₂ may be used. The concentration in Ni sulfamate may for instance be from 0.80 to 1.00 mol/l. The concentration in boric acid may for instance be from 0.40 to 0.60 mol/l. The concentration in NiCl₂ may for instance be from 0.03 to 0.05 mol/l. One or more additives may be added to the solution. For instance, a wetting agent or an electroplating enhancer can be added. Before to apply a current, the solution is preferably left in contact with the second mask for from 2 to 8 minutes, preferably from 3 to 7 minutes. This period enables the etching of oxide at the top of the first mold.

Step b is performed after step a and either before step c or after step c and before step d.

Since the second mold is formed on top of the first mold, the support structure (3) is made directly on the network (2) structure. This allows the support structure (3) to be seamlessly connected to the network (2), thereby forming a monolithic structure.

In embodiments, steps c and d may be performed by plating.

In embodiments, the method may further comprise steps of removing the first and the second molds from respectively the electrically conductive porous network (2) and the electrically conductive support structure (3). Preferably, the second mold may be removed before the first mold is removed. This is advantageous as it avoids the removal of some parts of the network (2) together with the second mold. Also, preferably, the second mold may be removed before delamination of the conductive network (2) from the substrate (e.g., Si substrate).

In embodiments, removing the second mold may comprise exposing the second mold to a suitable solvent which dissolves the second mold specifically with respect to the first mold, the network (2), and the support structure (3) (e.g., acetone for an anodized Al/Cu alloy first mold, a wax second mold, a Ni support structure (3) and a Ni network (2)). Once the second mold is removed, the remaining structure may be rinsed with deionized water.

In embodiments, at least part of the first mold (e.g., the part formed in step c2) may be removed selectively with respect to the support structure (3) and the network (2). For this purpose, in the case of a Ni support structure (3) and a Ni network (2), a solution capable to dissolve the first mold selectively with respect to Ni may be used. If the first mold is made of an anodized Al/Cu alloy, this solution may be a alkali hydroxide solution. Preferably, it is a hydroxide solution having a concentration of from 0.5 mol/l to 2 mol/l. More preferably, the concentration is from 0.8 mol/l to 1.2 mol/l. A preferred hydroxide is KOH. Exposure of the first mold to the solution may for instance be from 20 minutes to 180 minutes, preferably from 40 minutes to 120 minutes, more preferably from 50 minutes to 90 minutes.

In embodiments, if step c1 involved the formation of a copper layer at the bottom of the first mold, this layer may ultimately be removed with a solution comprising an organic acid (e.g., acetic acid), H₂O₂, and water or a solution of ammonium or potassium persulfate. Typically, 1 to 20 minutes is enough. Finally, the resulting porous electrode (1) can be cleaned by immersion in deionized water. In embodiments, it can then be dried at a temperature between 30 and 100 °C.

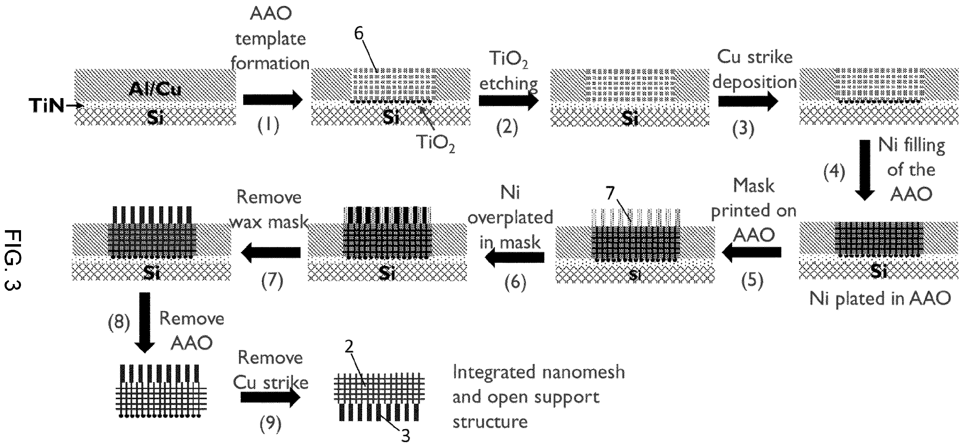

Fig. 3 depicts an example of a fabrication scheme according to an embodiment of the present invention. First, an assembly is provided comprising a Si substrate, a TiN layer on the Si substrate, and an Al/Cu alloy layer on the TiN layer. The first mold (6) is formed by exposing the Al/Cu alloy (0.4-0.5wt.% Cu doped Al) layer to a 30°C 0.3M oxalic acid solution under mechanical stirring at 1800 rpm and by applying a 40 V voltage through the solution. This voltage is maintained until 200s after that the current starts to drop, resulting in the overanodization of the alloy layer. This step (AAO template formation) results in the formation of a first mold (6) comprising a network (2) of interconnected channels, the first mold (6) being suitable for molding an electrically conductive network (2) as described in any embodiment of the first aspect. At the bottom of the first mold (6), the TiN layer has been transformed into a TiO₂ layer. This TiO₂ layer was then removed by exposing the layer to a solution comprising NH₄OH, H₂O₂, and H₂O for 3.5 minutes. The resulting structure is then rinsed five times with demineralized water before to perform the next step.

At this stage, step c was performed. First, a Cu layer was formed at the bottom of the first mold (6). For this purpose, a 30°C solution comprising 0.5 mol/l of CuSO₄x5H₂O and 1 mol/l sodium citrate was used. -10mA/cm² was applied to the solution for 50 s, thereby forming a 500 nm Cu layer at the bottom of the first mold (6). An alternative version of this Cu layer formation step can be performed by using a more dilute Cu solution. For instance, a solution comprising 5mM CuSO₄ and 20mM H₂SO₄ at an applied potential of -0.6V can be used, thereby forming a more homogenous 70nm thick Cu layer when transferring a total charge of -6.4C. Second, a Ni layer was formed on the Cu layer, thereby filling in the rest of the network (2) of interconnected channels. For this purpose, a 40 °C solution comprising 0.91 mol/l Ni sulfamate, 0.49M Boric acid, 0.04 mol/l NiCl₂x6H₂O, 2,5 ml/l of the additive Nikal PC-8, and 2 ml/l of a wetting agent was prepared and a -5 mA/cm² current was applied thereto until the network (2) of interconnected channels was entirely filled. Caution was used in order not to overfill the channels. This way, the formation of a Ni overlayer on and above the network (2) of interconnected channels was avoided. This step took from 30 to 40 minutes for a freshly prepared solution.

Next, step b was performed by forming a second mold (7) on top of the first mold (6) (and, hence, on top of the electroconductive network (2)), the second mold (7) being suitable for molding an electrically conductive support structure (3) as described in any embodiment of the first aspect. In the present example, the second mold (7) was made of wax and was inkjet-printed on the first mold (6). Since the first mold (6) was previously filled with the conductive network (2), printing the second mold (7) could be performed on a relatively flat surface and no or little wax penetrated the first mold (6). The second mold (7) had a length of 55 mm. The pixel size for the inkjet printing was chosen to be 31.25 µm. The second mold (7) pattern was a set of hexagonoid shapes having a length of 250 µm and a pitch of 345 µm. This pattern comprised 85,5% open area. To apply the wax on the Ni-filled first mold (6), the wax was first heated to 110°C while the Ni-filled first mold (6) was maintained at room temperature. The printing time was <60 seconds.

Next, step d was performed by exposing the second mold (7) to a 40°C solution comprising 0.91 mol/l Ni sulfamate, 0.49 mol/l boric acid, 0.04 mol/l NiCl₂*6H₂O, 2.5 ml/l Nickal PC-8, and 2 ml/l wetting agent NW. This solution was left in contact with the second mold (7) for 5 minutes before applying a first current therethrough. This 5 min period enables the etching of oxide at the top of the first mold (6). Then, a -10mA/cm² current was applied for 500 s to the conductive network (2) area (using the open area of the first mold), followed by a -5mA/cm² current applied for 3200 s to the open wax mask area. The resulting Ni support structure (3) was 5 µm think.

Next, the second mold (7) was removed before removing the first mold (6) and before delamination of the conductive network (2) from the Si substrate. This was performed in order to avoid the removal of some parts of the Ni network (2) together with the second mold (7). For this purpose, the structure obtained in step d was exposed at room temperature for 5 minutes to fresh acetone, rinsed with water, then exposed 5 minutes to fresh acetone again. Next, the resulting structure was rinsed ten times in deionized water.

In order to remove the first mold (6), it was contacted for 60 minutes with a 1M KOH solution. At this point the monolithic structure may already delaminate from the support wafer, but in most cases this happens in the next etching step.

Next, the bottom Cu layer, appearing as a red shining layer, was removed by etching by immersion the conductive network (2) in a Cu etching solution comprising acetic acid, H₂O₂, and H₂O for 3 minutes. The resulting porous electrode (1) came off the support wafer and was cleaned by immersion in deionized water, followed by drying at 80°C.

In the third aspect, the present invention relates to an electrochemical device. The electrochemical device comprises a porous electrode (1) according to any embodiment of the first aspect. The electrochemical device is selected from an electrolyzer, a fuel cell, and a battery (e.g., a redox flow battery). Examples of electrolyzers are those generating H₂ and O₂ from water, generating organic compounds from CO₂ reduction, generating ammonia from N₂ reduction, and generating water from O₂ reduction.

The electrolyzer of the present invention may comprise two porous electrodes (1) according to the present invention, each electrode (1) contacting a different side of a membrane (4). In embodiments, the electrolyzer may comprise an anode and a cathode, both according to an embodiment of the first aspect. In embodiments, the membrane (4) may be an anion or cation exchange membrane (4).

Fig. 2 shows an electrolyzer comprising two porous electrodes (1) according to the first aspect of the present invention. More in particular, an alkaline electrolyzer is depicted comprising two porous electrodes (1) according to the first aspect separated by a membrane (4). The networks (2) of both elctrodes face toward each other while the supports (3) of both electrodes (1) face away from each other. The porous electrode (1) depicted on the left of the electrolyzer acts as a cathode where the reduction of water occurs to produce H₂ and 2 OH⁻. On the bottom left of the electrolyzer, an inlet is depicted for an electrolyte to enter the device. The OH- produced at the cathode cross the membrane (4) and reach the anode comprising of the porous electrode (1) depicted on the right of the electrolyzer. On the top left of the electrolyzer, an outlet is depicted where the hydrogen gas generated at the cathode can be collected from the electrolyzer. On the bottom right, an inlet is depicted where an electrolyte can enter the device. On the top right, an outlet is depicted where the oxygen gas generated by oxidation of the hydroxyl anions at the anode can be collected from the device.

Taking the application of the metal networks (2) in the membrane (4)-porous electrodes (1) assembly of this water electrolyzer as an example, a it is very advantageous that the network (2) can be penetrated by the electrolyte. This allows the catalytic reaction leading to an ion exchange between cathode and anode electrodes (1) through the separating membrane (4). Additionally, the gaseous products (H₂ and O₂) formed inside the network (2) should typically be removed from the nanostructure through the open front side. Further, the network (2) should typically withstand mechanical stress caused by the cell assembly, high solution flow rate, gas bubble formation, and eventually applied pressures in the electrolyzer. This is ensured by the electrically conductive support structure (3).

The catalytic efficiency of electrolyzers such as the one schematized in Fig. 2 benefits greatly from the high number of exposed active sites provided by the high surface area network (2) of the porous electrode (1) according to the first aspect. This allows for the production of low-cost green hydrogen that can be used as a form of energy storage, for the chemical industry or to generate electricity in a fuel cell. Similarly, in fuel cells, the high number of exposed active sites of the network (2) of the porous electrode (1) is beneficial.

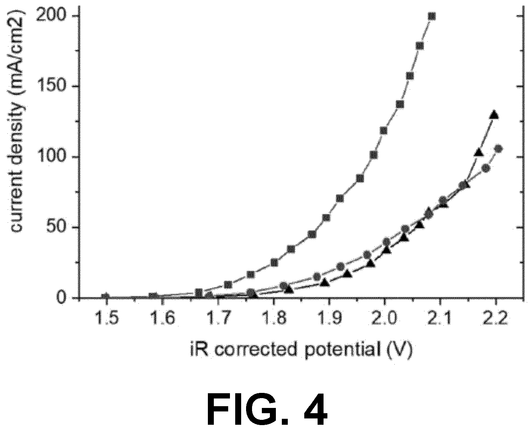

The following experiment has been conducted to evaluate the performance of electrolyzers according to the third aspect using porous electrodes (1) according to the first aspect of the present invention. For this purpose, H-TEC Education's 1-Cell Rebuildable PEM Electrolyzer Kit was adapted and fitted with electrodes (1) according to the first aspect of the present invention or with comparative electrodes. The electrolyzer kit comprises a proton exchange membrane and two electrodes. In all configurations, the proton exchange membrane was replaced by an anion exchange membrane (4) Fumasep FAB PK-130 and the electrodes were replaced by one of the following: 1,6 mm thick Ni foam Ni-5763 electrodes from Recemat BV (first comparative configuration, triangles in Fig. 4), 1,6 mm thick Ni foam Ni-5763 electrodes from Recemat BV on which a 5 µm thick Ni support structure (3) has been formed, said support being in physical contact with the membrane (4) (second comparative configuration, discs in Fig. 4), and 1,6 mm thick Ni foam Ni-5763 electrodes from Recemat BV in physical contact with a porous electrode (1) according to the present invention wherein the electrically conductive porous network (2) is in physical contact with the membrane (4) (embodiment, squares in Fig. 4). Although not necessary, the Ni foam helps to ensure a good contact between the contacting plates and the membrane (4). In embodiments, a meal foam (e.g., a Ni foam) can be present on the support structure (3) of an electrode (1) according to the present invention. For instance, the metal foam can be between the electrode (1) and a contacting plate of the electrolyzer. The porous electrode (1) according to the present invention comprised a 4 µm thick Ni porous network (2) of interconnected wires and a 5 µm thick Ni support structure (3). This porous electrode (1) was easy to handle due to the presence of the Ni support structure (3). The Ni foam Ni-5763 electrodes from Recemat BV had a porosity of 96%. The 5 µm thick support structure (3) had openings (5) representing 15% of the top and bottom surface area. Before use, the anion exchange membrane (4) was first soaked 24h in 1M KOH. The devices were used to generate hydrogen and oxygen from de-ionized water with the aid of a power supply. For each configuration, the electrolyte was at 20.3°C, the flow rate was at 5ml/min, the electrode area was 16 cm², each potential was applied for 5 min with the anode as a working electrode, and the cathode as a counter electrode. At each potential step, an impedance measurement was done after 3 min to determine the ohmic resistance for the iR correction. Fig. 4 shows schematically the three configurations (top) and the corresponding current-voltage curves (bottom). As can be readily seen in these curves, the configuration according to the present invention enables higher current densities at much lower overpotentials than in the comparative configurations.

The gas diffusion electrodes as an electrochemical device of the present invention may be an electrocatalytic system for CO₂, N₂ or O₂ reduction from the gas phase.

An example of a battery according to the third aspect is a redox flow battery. The use of porous electrodes (1) according to the first aspect enable the electrolyte flow between anode and cathode.

In embodiments, the battery according to the present invention may comprise an anode and a cathode, both according to any embodiment of the first aspect of the present invention. For instance, the battery may be a redox flow battery comprising an anode and a cathode, both according to any one of

Typical fuel cells according to the present invention involve H₂ oxidation and O₂ reduction.

In embodiments, the fuel cell may comprise an anode and a cathode, both according to any embodiment of the first aspect of the present invention.

In a further aspect, the present invention relates to the use of an electrode according to any embodiment of the first aspect as a filter. In embodiments of this use, the surface of the support structure, facing away from the network, has openings (5) representing from 2 to 50%.

It is to be understood that although preferred embodiments, specific constructions, and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A porous electrode (1) comprising:
a. an electrically conductive porous network (2) of interconnected wires, and
b. an electrically conductive support structure (3),
wherein the network (2) is in direct physical and electrical contact with the support structure (3), wherein the network (2) has a volumetric surface area of from 2 m²/cm³ to 90 m²/cm³, and a porosity of from 50% to 90%,
wherein a surface of the support structure (3), facing away from the network (2), has openings (5) representing from 2 to 90% of its surface area, and wherein the openings (5) are fluidly connected to the pores of the network (2).

2. The electrode (1) according to claim 1, wherein the conductive network (2) of interconnected wires comprises Ni.

3. The electrode (1) according to claim 1 or claim 2, wherein the conductive porous network (2) of interconnected wires has a total thickness of from 1 to 100 µm, preferably from 4 to 10 µm.

4. The electrode (1) according to any one of the preceding claims, wherein the conductive support structure (3) comprises Ni or Cu.

5. The electrode (1) according to any one of the preceding claims, wherein the wires are from 10 to 200 nm thick, preferably from 30 to 60 nm thick.

6. The electrode (1) according to any one of the preceding claims being a gas-diffusion electrode (1).

7. A method for the formation of a porous electrode (1) according to any one of claims 1 to 6, comprising the steps of:
a. Forming a first mold (6) comprising a network (2) of interconnected channels, the first mold (6) being suitable for molding a network (2) of interconnected wires having a volumetric surface area of from 2 m²/cm³ to 90 m²/cm³, and a porosity of from 50% to 90%, and
b. Forming a second mold (7) on top of the first mold (6), the second mold (7) being suitable for molding a support structure (3) having a surface, facing away from the network (2) of interconnected wires, having openings (5) representing from 2 to 90% of its surface area, and wherein the openings (5) are fluidly connected to the pores of the network (2) of interconnected wires,
c. Filling in the first mold (6) with a first conductive material,
d. Filling in at least partially the second mold (7) with a second conductive material,
wherein step b is performed after step a, and either before step c or after step c and before step d, and
wherein the first and the second conductive materials are different or the same.

8. The method according to claim 7, wherein forming the first mold (6) comprises anodizing a metal layer.

9. The method according to claim 7 or claim 8, wherein forming the second mold (7) comprises printing the second mold (7) on the first mold (6).

10. The method according to claim 9, wherein the printing is an ink-jet printing.

11. The method according to any one of claims 7 to 10, wherein the second mold (7) is made of a wax.

12. An electrochemical device comprising a porous electrode (1) according to any one of claims 1 to 6, the electrochemical device being selected from an electrolyzer, a fuel cell, and a battery.

13. An electrolyzer according to claim 12, comprising an anode and a cathode, both according to any one of claims 1 to 6.

14. A fuel cell according to claim 12, comprising an anode and a cathode, both according to any one of claims 1 to 6.

15. A battery according to claim 12, being a redox flow battery comprising an anode and a cathode, both according to any one of claims 1 to 6.
